Europäisches Patentamt

European Patent Office

Office européen des brevets

(11) Publication number: **0 261 850**
**A2**

## (12) EUROPEAN PATENT APPLICATION

(21) Application number: **87308081.6**

(22) Date of filing: **11.09.87**

(51) Int. Cl.4: **B29C 65/58** , //B29K105:12

(30) Priority: **24.09.86 GB 8622988**

(43) Date of publication of application:
**30.03.88 Bulletin 88/13**

(84) Designated Contracting States:
**DE FR GB IT**

(71) Applicant: **WESTLAND GROUP PLC**
**Group Patents Dept. Box 82, Westland Works**
**Yeovil Somerset BA20 2YB(GB)**

(72) Inventor: **Barnes, Nicholas Anthony Preston**
**Middle Cottage**
**Higher Street Bower Hinton**
**Martock Somerset(GB)**
Inventor: **Damon, John William**
**149 Lower Fairmead Road**
**Yeovil Somerset(GB)**
Inventor: **Duthie, Anthony Craig**
**122 Church Green Semley**
**Shaftesbury Dorset(GB)**
Inventor: **Heseltine, Mark Julian**
**"Danesfield" Yeovil Road**
**Crewkerne§Somerset(GB)**

(74) Representative: **Jack, Bruce James et al**
**FORRESTER & BOEHMERT**
**Widenmayerstrasse 4/I**
**D-8000 Munchen 22(DE)**

(54) **Joining fibre reinforced thermoplastic materials.**

(57) In a method of manufacturing a fusion bonded joint between a fibre reinforced thermoplastic resin component having at least 30 per cent of its volume comprised by reinforcing fibres (high fibre loaded) and another fibre reinforced thermoplastic resin component having more or less than 30 per cent of its volume comprised by reinforcing fibres, additional thermoplastic resin is incorporated at the joint interface prior to joining by fusion bonding.

The additional thermoplastic resin is preferably consolidated in those surfaces of the high fibre loaded component which are to be joined to other components before fusion bonding takes place.

A preferred method of fusion bonding is by ultrasonic welding.

A mesh comprising metal strands extending at least across the joint may be incorporated at the interface of a joint between two components to provide increased joint strength and electrical conductivity across the joint in the case of carbon fibre reinforced components.

EP 0 261 850 A2

## Joining Fibre Reinforced Thermoplastic Materials

This invention relates to joining components manufactured from fibre reinforced thermoplastic resin and is particularly concerned with joining such components by fusion bonding.

Fibre reinforced thermoplastic resin materials are particularly attractive for use in aircraft structures because of their high strength to weight ratio and good tolerance to damage and environmental effects; however, a satisfactory method of joining structural components manufactured from these materials is required.

Mechanical fastening methods not only give rise to undesirable increases in structural weight and cost but also require that holes be drilled in the components which can be a potential source of structural failures.

Various fusion bonding techniques have been proposed for use in joining fibre reinforced thermoplastic components including ultrasonic welding. Satisfactory joints have been obtained between components manufactured from low fibre loaded thermoplastic resin; however, when joining high fibre loaded thermoplastic resins components either to each other or to low fibre loaded components, less than adequate joint strengths have been obtained for use in aircraft structures.

By a low fibre loaded thermoplastic resin component we refer to a component having up to 30 per cent of its volume comprised by reinforcing fibres such as, for example, carbon fibres, such a component generally being manufactured by injection moulding using chopped short fibres which are randomly orientated in the finished component.

By a high fibre loaded thermoplastic resin component we refer to a component having in excess of 30 per cent of its volume comprised by reinforcing fibres such a component generally being manufactured by a hand lay-up process or a continuous automated lay-up process using thermoplastic resin laminae which are reinforced with continuous unidirectional fibres, woven continuous fibres, or unidirectional cut short-length fibres in the form of a felt material.

US-A-4,326,902 (General Dynamics) discloses a method for joining thermoplastic material members by ultrasonic welding in which energy concentrator members are interposed between the thermoplastic material members prior to welding. The energy concentrator members are manufactured from thermoplastic resin or from other material which meets the requirement of being able to be melted by the application of ultrasonic energy so as to form an acceptable weld nugget with the thermoplastic material members.

Tests carried out by us on high fibre reinforced thermoplastic material shear test specimens having thermoplastic resin energy directors formed on the surfaces which were to be joined by ultrasonic welding produced very poor shear strengths. These strengths were not considered adequate for joints between structural components, particularly in aircraft structures.

US-A-4,673,450 (Boeing) issued June 16, 1987, discloses a method of joining by welding graphite fibre reinforced thermoplastic laminates. It further discloses the step of disposing a layer of thermoplastic resin material between the area of surface contact of the parts prior to applying welding pressure.

In manufacturing aircraft fuselage structures from thermoplastic resin components reinforced with electrically conductive fibres such as carbon or boron fibres, it is a requirement that electrical conductivity be provided across joints between adjacent fuselage panel members as a protection against lightning strike and to ensure adequate ground planes for aerials. Neither of the aforementioned U.S. patent references discuss this problem or disclose a solution.

It is an object of the present invention to provide a method of manufacturing a fusion bonded joint between fibre reinforced thermoplastic resin components at least one of which components is high fibre loaded so as to obtain a joint having good mechanical strength.

It is another object of the present invention to provide high fibre loaded thermoplastic resin components which are suitable for joining to each other and, also, to low fibre loaded thermoplastic resin components by fusion bonding whereby joints having good mechanical strength are obtained.

It is a further object of the present invention to provide a method of manufacturing joints between high fibre loaded thermoplastic resin components and, also, between high and low fibre loaded thermoplastic resin components whereby joints of good mechanical strength are obtained and an electrically conductive path is provided across the joint between adjacent components.

Accordingly, in one aspect of the invention, a method of manufacturing a fusion bonded joint between fibre reinforced thermoplastic resin components, at least one of said components having in excess of 30 per cent by volume comprised by reinforcing fibres, is characterised in that additional thermoplastic resin is incorporated at the joint interface prior to joining by fusion bonding.

Suitable reinforcing fibres are carbon, boron, glass or aramid.

A suitable thermoplastic resin is polyether-etherketone.

To ease of assembly of structural components, prior to joining by fusion bonding, and to obtain higher strength bonds, we have found it preferable to consolidate additional thermoplastic resin in those surface areas of a high fibre loaded component which are to be joined with surface areas of other high or low fibre loaded components during manufacture of the component. However, other manners of depositing additional thermoplastic resin on the surface area of a high fibre loaded component, such as, for example, spraying, are not precluded. In circumstances where joints having the highest mechanical strengths are not of the essence, additional thermoplastic resin may be provided as a film of required thickness inserted in the interface between two components on assembly prior to fusion bonding.

We have found that introduction of additional thermoplastic resin material so as to reduce the presence of reinforcing fibres in the surface area which is to be bonded to near or below 30 per cent by volume enables a satisfactory joint having good sheer strength to be achieved by fusion bonding without detracting from the strength of the component.

It is a requirement in some structures such as, for example, an aircraft fuselage structure manufactured from high fibre loaded thermoplastic resin components that an electrically conductive path be provided across a joint between adjacent components such as skins or panels. We proposed to provide such path by incorporating a metal mesh at the joint interface. However, we have found that the incorporated metal mesh is also beneficial in improving the quality and strength of the joint so that the provision of metal mesh at the interface should not be considered as being limited only to joints where electrical conductivity across the interface is a requirement.

We have found it to be desirable that such metal mesh should be of sufficient hardness as not to be flattened by pressure exerted across the joint during fusion bonding. Also, it is preferably that the mesh have good corrosion resistance.

In achievement of these requirements we prefer to use mesh manufactured from a nickel-copper based alloy, such as that sold under the Registered Trade Mark "MONEL", or from stainless steel.

In circumstances where weight is not a consideration we have found that the additional thermoplastic resin may be provided as a film of suitable thickness sandwiched between two layers of metal mesh.

A situation which arises in the use of metal mesh to provide electrical conductivity across joints in an aircraft structure is that not only is the desirable electrical path provided across the joint, but an undesirable highly conductive path is achieved along the length of the joint which will influence the required uniform distribution of currents.

In prevention of such electrically conductive longitudinal paths we have proposed to use metal strands and thermoplastic resin strands interwoven to provide a hybrid mesh having metal warp strands and thermoplastic resin weft strands.

Fusion bonding may be carried out using ultrasonic welding techniques and we have obtained good results with ultrasonic welding.

However, to produce a fusion bond line of considerable length by a single ultrasonic welding operation would require that a very large welding horn be used and that high amounts of energy be supplied to produce the required ultrasonic vibration of the welding horn. Also, problems arise in welding curved surfaces such as, for example, aircraft fuselage structures, when the welding horn would require to be curved to match the surface curvature of the components to be welded. In overcoming these problems we propose to adopt a step welding technique in which a series of small discontinuous welds are produced with the neighbouring welds contiguous whereby a continuous fusion bond line is obtained.

Accordingly, a method of joining a high fibre loaded thermoplastic resin component to a high or low fibre loaded thermoplastic resin component by fusion bonding using ultrasonic welding in accordance with the present invention is further characterised in that a continuous fusion bond line between the components is produced by a step welding technique comprising making a series of discontinuous welds of small area, each such weld area being contiguous with its neighbouring weld areas.

The present invention further extends to an assembly of one or more high fibre loaded thermoplastic resin components joined with one or more high or low fibre loaded thermoplastic resin components by fusion bonding characterised by consolidation of additional thermoplastic resin at joint interfaces between the components.

Additionally, the joint interfaces may incorporate a mesh comprising metal strande extending at least across the joint.

The invention also extends to an assembly of one or more high fibre loaded thermoplastic resin components joined by fusion bonding using ultrasonic welding to one or more high or low fibre loaded thermoplastic resin components wherein a continuous fusion bond line between joined components is comprised by a plurality of discontinuous welds of small area each such weld area being contiguous with its neighbouring weld areas.

Trials carried out by us on joining high fibre loaded thermoplastic resin material to both high and low fibre loaded thermoplastic resin material by fusion bonding using ultrasonic welding techniques together with the results of these trials will now be described with reference to the accompanying drawings. graphs and tables in which:-

Figure 1 is a side elevation of an ultrasonic welding machine;

Figure 2 is a front elevation of the machine shown in Figure 1;

Figure 3 shows a booster and a welding horn used with the machine shown in Figures 1 and 2;

Figure 4 shows plan and side elevations of a welded lap joint shear test specimen;

Figure 5 is a side elevation of part of a helicopter fuselage structure manufactured from fibre reinforced thermoplastic resin panels joined by fusion bonding, and illustrating current flow across the joints between the panels;

Figure 6 is a graph showing plots of the shear stresses obtained from welded continuous fibre reinforced thermoplastic resin test specimens of laminated construction; and

Figure 7 is a graph showing plots of the shear stresses obtained from test specimens each comprising a continuous fibre reinforced thermoplastic resin laminate construction test coupon welded to an injection moulded short fibre reinforced thermoplastic resin test coupon.

If two or more components are rubbed together with sufficient vigour the level of frictional heat produced may cause localised melting of the material of which the components are formed. This is the principle used in ultrasonic welding where a welding horn, or sonotrode as it is also known, is used to transmit vibratory energy to a component to cause it to melt where it comes into contact with another component. Where the components are manufactured from thermoplastic resin the localised melted resin fuses to form a homogenous bond on solidification after removal of the vibratory energy.

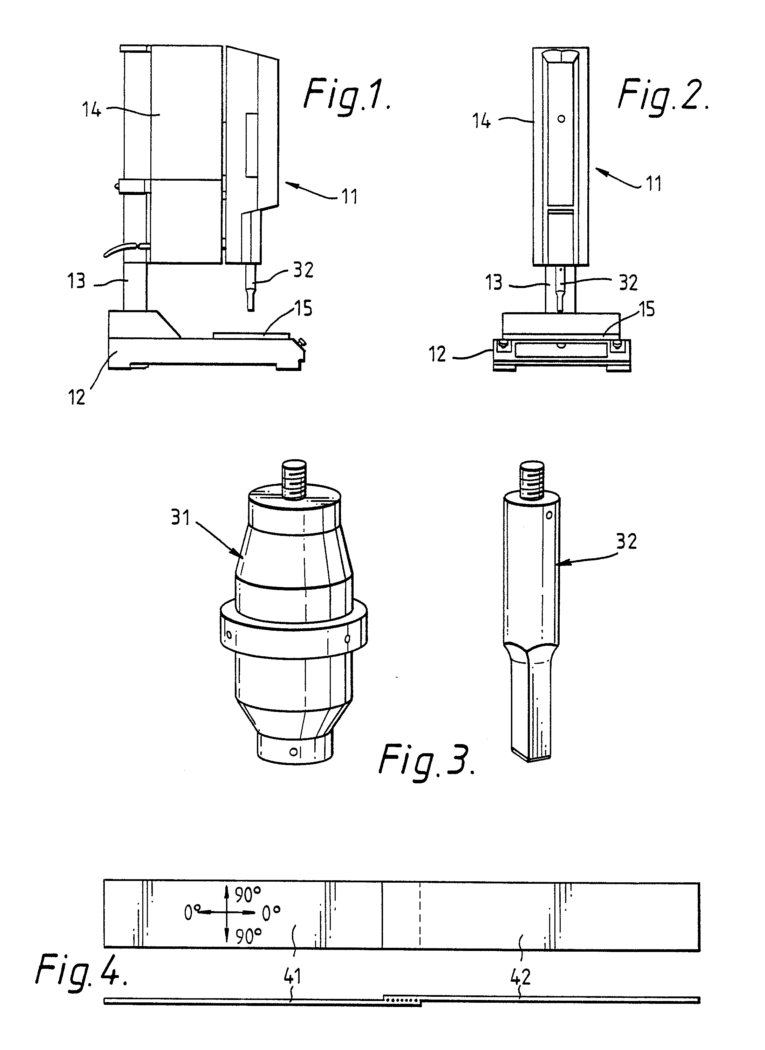

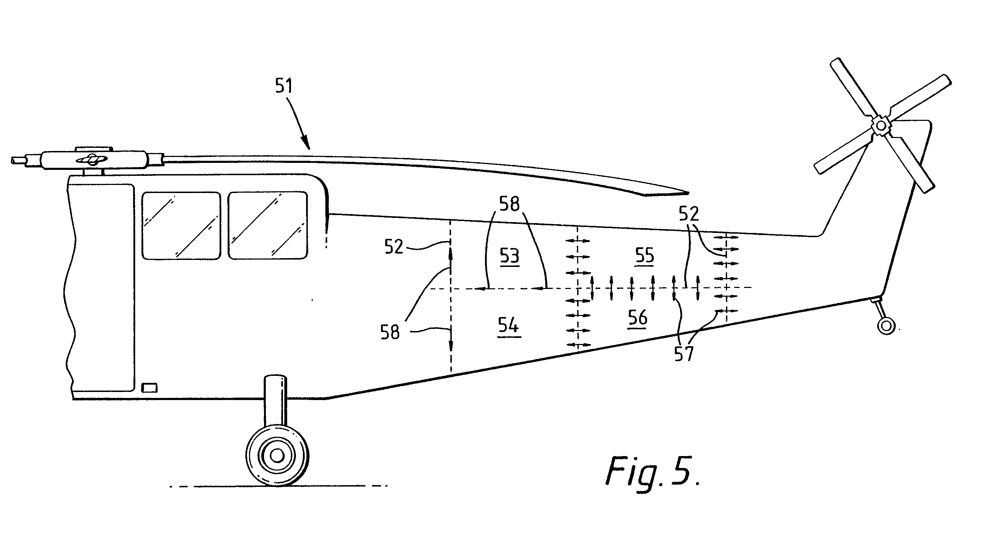

Referring first to Figures 1 to 4 of the accompanying drawings, fusion bonded lap joint shear test specimens 41 (reference Figure 4) were prepared by ultrasonic welding using a Branson Model 8800 ultrasonic welding machine 11 (reference Figures 1 and 2) sold in the United Kingdom by Lucas Daw Ultrasonics Limited. The machine 11 comprises a base 12 which supports a pillar 13 carrying a body 14 housing a converter (not shown) that converts electrical energy into mechanical vibratory energy. Various boosters 31 and welding horns 32 (reference Figure 3) may be attached to the converter, the booster 31 being located between the converter and the welding horn so as to amplify the amplitude of vibration input to the welding horn 32. The welding horn 32 projects from the bottom of the body 14 as is seen in Figures 1 and 2. The base 12 provides a bed 15 on which is mounted a fixture jig (not shown) that supports and holds the test specimen 41 during the welding process.

The machine used in our trials had a power output of 1800 electrical watts to the converter and 1740 mechanical watts to load. The output frequency was 20 kHz and the output amplitude could be modified by changing the booster and horn combination. Three boosters colour coded green, gold and silver were used, these boosters having amplitude increasing ratios of 1 to 1, 1 to 1.5 and 1 to 2.0, respectively. Three horns were used being coded types A, D and E, respectively. Horn type A was the largest horn and due to its large mass, it had a small amplitude of vibration. It could be used with the highest ratio booster, i.e. the silver booster, at clamping pressures up to about 620 kPa without stalling the transducer of the ultrasonic welding machine. Horn D was smaller than horn A and as such had a higher amplitude of vibration so that with the silver booster it had to be used at clamping pressures below 140 kPa to avoid the risk of transducer stall. Also, horn D had a fine knurl pattern cut on its end face in an attempt to reduce relative movement between the horn end face and test specimen which it was considered might create an extra interface, with a consequent loss of energy at the joint interface where fusion bonding was required to take place. The knurl pattern was an attempt to improve the grip of the horn on the surface of the test specimen and hence reduce energy loss. Horn E was of similar shape to horn D but did not have a knurl pattern on its end face and had a larger end face area than horn D.

Lap joint shear test specimens 41 (reference Figure 4) were produced by joining two test coupons 42 and 43 at a 13mm overlap. Each test coupon was 25 mm wide and 115mm long.

Test coupons of both laminated and injection moulded construction were produced, tests being carried out on joining two laminated construction test coupons so as to simulate joining of major structural components such as spars, ribs and panels or skins in an aircraft fuselage, and on joining a laminated construction test coupon to an injection moulded test coupon so at to simulate joining components such as brackets to spars and ribs.

Laminated test coupons were produced by laying up laminae of unidirectional continuous carbon fibre reinforced thermoplastic resin tape produced and sold by Fiberite GmbH as "Aromatic Polymer Composite" and referred to in abbreviated form as "APC2". To simulate the structural components that we are concerned to join each laminated test coupon comprised sixteen laminae laid up with the fibres orientated in a 0° - 90° - 90° - 0° configuration repeated four times, the 0° direction extending along the length of the test coupon and the 90° direction extending transversely thereof as is shown in Figure 4. The laminae were consolidated in a heated press. In the order of 60 per cent by volume of APC2 tape comprises carbon fibres so that finished laminated test coupons were high fibre loaded.

Injection moulded test coupons were produced from polyether-etherketone thermoplastic resin, hereinafter referred to as PEEK, filled with chopped short fibre carbon fibres to produce finished coupons having approximately 30 per cent of their volume comprised by reinforcing fibres.

Sheer test specimens 41 were pulled in a tensile test machine and the load at failure was recorded. The shear stress at failure for each test specimen was then computed.

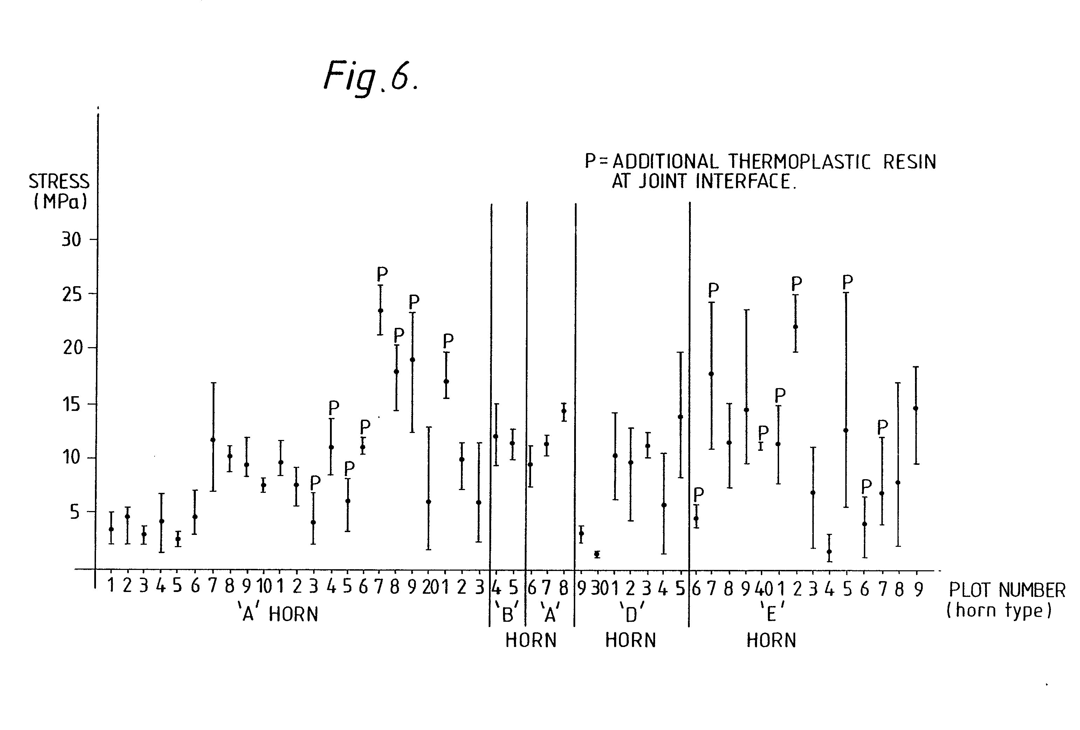

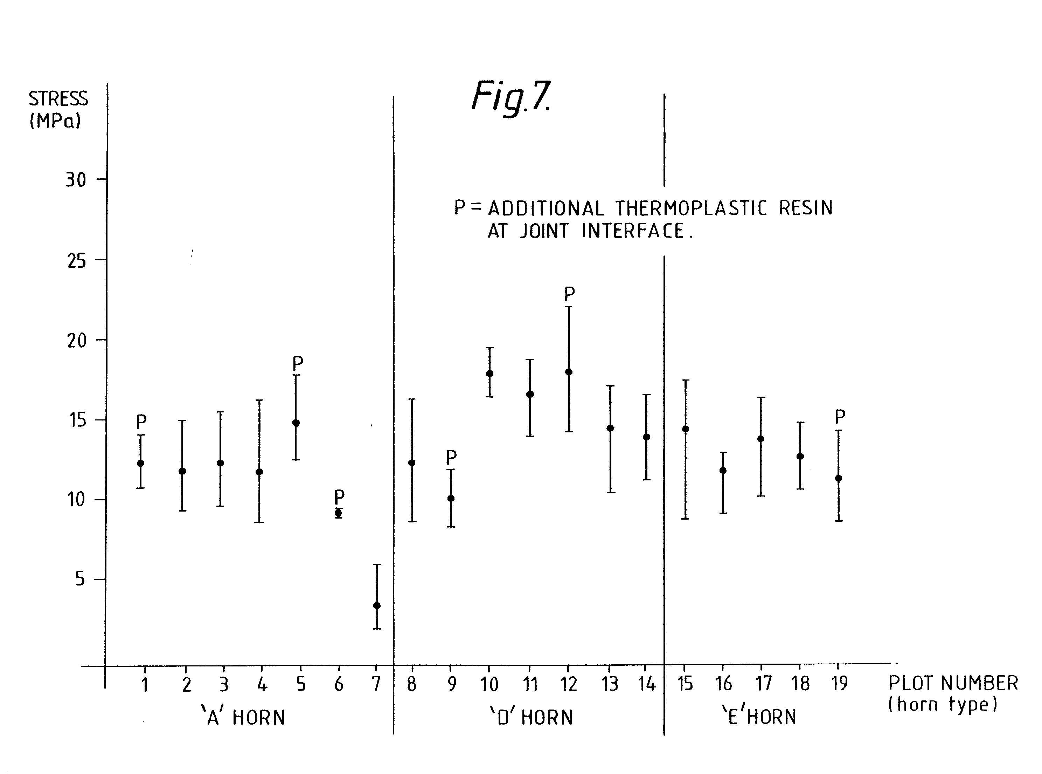

In graphs of Figures 6 and 7 each line represents the shear stress range obtained from a set of three test specimens and the spot on each line indicates the mean value of the three shear stress values.

Tables 1 and 2 set out below show for the test specimen results plotted in the graphs of Figures 6 and 7, respectively, the horn and booster combination for each set of three shear test specimens together with the weld time, i.e. the period for which ultrasonic vibratory energy was applied; the hold time, i.e. the time for which clamping pressure was applied to the joint to allow it to cool after removal of ultrasonic vibratory energy; the clamping pressure exerted by the horn on the test specimen and the trigger number which is a machine setting controlling the clamping pressure at which ultrasonic vibrations are initiated; and the coupon type from which each set of three test specimens were manufactured together with details of the weld interface for each set.

TABLE 1 - IDENTIFICATION OF PLOTS

| Plot No | Horn | Booster | Weld Time (s) | Hold Time (s) | Pressure kPa | Pressure Trig No | Coupon Type | Weld Interface |
|---------|------|---------|---------------|---------------|--------------|------------------|-------------|----------------|
| 1 | A | Silver | 4 | 2 | 480 | 16 | APC2 to APC2 | 3 energy directors moulded transversely |
| 2 | A | " | 4 | 2 | 480 | 24 | " | " |
| 3 | A | " | 4 | 2 | 550 | 16 | " | " |
| 4 | A | " | 4 | 2 | 550 | 24 | " | " |
| 5 | A | " | 4 | 2 | 620 | 24 | " | " |
| 6 | A | " | 4 | 2 | 620 | 16 | " | " |
| 7 | A | " | 4 | 2 | 480 | 16 | " | Energy Directors moulded in cross hatch pattern |
| 8 | A | " | 4 | 2 | 480 | 24 | " | " |
| 9 | A | " | 4 | 2 | 550 | 24 | " | " |
| 10 | A | " | 4 | 2 | 550 | 16 | " | " |
| 11 | A | " | 4 | 2 | 620 | 16 | " | " |
| 12 | A | " | 4 | 2 | 620 | 16 | " | 5 x thick PEEK fibre |
| 13 | A | " | 4 | 2 | 620 | 16 | APC2 with processed PEEK | 3 x E.D. |
| 14 | A | " | 4 | 2 | 620 | 16 | APC2 to APC2 with PEEK | Nothing |
| 15 | A | " | 4 | 2 | 635 | 16 | " | 6 x thick PEEK fibre |
| 16 | A | " | 4 | 2 | 550 | 16 | " | " |
| 17 | A | " | 3 | 2 | 410 | 20 | " | Monel Mesh |
| 18 | A | " | 2 | 2 | 410 | 20 | " | " |
| 19 | A | " | 3 | 2 | 480 | 20 | " | " |

6

TABLE 1 - IDENTIFICATION OF PLOTS (CONTINUATION)

| Plot No | Horn | Booster | Weld Time (s) | Hold Time (s) | Pressure kPa | Trig No | Coupon Type | Weld Interface |
|---|---|---|---|---|---|---|---|---|
| 20 | A | Silver | 3 | 2 | 345 | 20 | APC2 to APC2(plain) | Monel Mesh |
| 21 | A | " | 3 | 2 | 410 | 20 | APC2 to APC2 + PEEK | Copper Mesh |
| 22 | A | " | 3 | 2 | 345 | 20 | APC2 to APC2(plain) | " |
| 23 | A | " | 3.5 | 2.5 | 550 | 21 | " | PEEK impreg-nated Monel Mesh |
| 24 | B | " | 1 | 2.5 | 620 | 21 | " | Monel |
| 25 | B | " | 1 | 2.5 | 690 | 21 | " | " |
| 26 | A | " | 4 | 2.5 | 440 | 4 | " | Copper mesh (wide) |
| 27 | A | " | 4 | 2.5 | 370 | 4 | " | " |
| 28 | A | " | 3.5 | 2.5 | 410 | 4 | " | Tine Stain-less mesh |
| 29 | D | " | 2.5 | 3 | 235 | 21 | " | " |
| 30 | D | " | 2.5 | 3 | 235 | 21 | " | Glass fibre |
| 31 | D | Green | 5 | 3 | 635 | 21 | " | Stainless Steel (coarse) |
| 32 | D | Silver | 2 | 2.5 | 235 | 21 | " | Steel mesh + 5 x PEEK fibres |
| 33 | D | " | 2 | 2.5 | 140 | 18 | " | " |
| 34 | D | " | 2 | 3 | 235 | 18 | " | " |
| 35 | D | " | 2 | 3 | 110 | 10 | " | Thin mesh/ thick PEEK film/thin mesh |

TABLE 1 - IDENTIFICATION OF PLOTS (CONTINUATION)

| Plot No | Horn | Booster | Weld Time (s) | Hold Time (s) | Pressure kPa | Trig No | Coupon Type | Weld Interface |
|---|---|---|---|---|---|---|---|---|
| 36 | E | Green | 2 | 3 | 410 | 4 | APC2 to APC2 + Monel + PEEK- (plain) | None |
| 37 | E | " | 2 | 3 | 410 | 4 | APC2 to APC2 + PEEK (plain) | Monel Mesh |
| 38 | E | " | 3 | 3 | 380 | 4 | APC2 to APC2(plain) | " |
| 39 | E | " | 3 | 3 | 380 | 24 | " | " |
| 40 | E | Silver | 2 | 3 | 235 | 24 | APC2 to APC2 + Monel + PEEK (plain) | None |
| 41 | E | " | 1 | 3 | 105 | 10 | " | " |
| 42 | E | " | 1 | 3 | 70 | 9 | APC2 to APC2 PEEK (plain) | Monel |
| 43 | E | " | 1 | 3 | 70 | 4 | APC2 to APC2-plain | Monel |
| 44 | E | " | 0.6 | 3 | 70 | 4 | " | " |
| 45 | E | Gold | 1.5 | 3 | 235 | 21 | APC2 to APC2 + PEEK + PEEK | Monel Mesh |
| 46 | E | " | 2 | 3 | 140 | 21 | " | " |
| 47 | E | " | 3 | 3 | 140 | 21 | " | " |
| 48 | E | " | 1 | 3 | 345 | 21 | APC2 to APC2-plain | Monel |
| 49 | E | " | 1.5 | 3 | 410 | 21 | " | " |

8

BAD ORIGINAL

TABLE 2 - IDENTITY OF PLOTS

| Plot No | Horn | Booster | Weld Time (s) | Hold Time (s) | Pressure kPa | Trig No | Coupon Type | Weld Interface |
|---|---|---|---|---|---|---|---|---|
| 1 | A | Silver | 3 | 2 | 620 | 20 | APC2 to Inj PEEK + PEEK | Monel Mesh |
| 2 | A | " | 3.5 | 2 | 620 | 16 | APC2 to Inj PEEK (plain) | " |
| 3 | A | " | 3.5 | 2 | 620 | 16 | " | BronzeMesh |
| 4 | A | " | 3 | 2 | 410 | 16 | APC2 to Inj PEEK (plain) | Copper Mesh |
| 5 | A | " | 3 | 2 | 410 | 20 | APC2 to Inj PEEK + PEEK | " |
| 6 | A | " | 3 | 2 | 585 | 20 | " | Monel |
| 7 | A | " | 3.5 | 2.5 | 620 | 21 | APC2 to Inj PEEK (plain) | Impregnated Monel mesh |
| 8 | D | " | 2.5 | 3 | 235 | 21 | " | Stainless steel mesh |
| 9 | D | " | 2 | 3 | 110 | 10 | APC2 to Inj PEEK + PEEK | Thin mesh/ thick PEEK/ thin mesh |
| 10 | D | " | 2 | 3 | 140 | 4 | APC2 to Inj PEEK (plain) | Monel mesh |
| 11 | D | " | 2 | 3 | 70 | 4 | " | " |
| 12 | D | " | 2 | 3 | 70 | 4 | APC2 to Inj PEEK + PEEK | " |
| 13 | D | " | 2 | 3 | 85 | 4 | APC2 to Inj PEEK (plain) | " |
| 14 | D | " | 2 | 3 | 85 | 10 | " | " |
| 15 | E | " | 1 | 3 | 70 | 4 | " | " |
| 16 | E | Green | 2 | 3 | 345 | 4 | " | " |
| 17 | E | Gold | 2 | 3 | 410 | 21 | " | " |
| 18 | E | " | 1.5 | 3 | 205 | 21 | " | " |
| 19 | E | " | 1.5 | 3 | 170 | 21 | APC2 to Inj PEEK + PEEK | Monel |

9

Whilst ultrasonic welding has been used to produce satisfactory bonds between low fibre loaded thermoplastic resin components, i.e. components having less than 30 per cent of their volume comprised by reinforcing fibres, it had not been found possible to produce satisfactory bonds between high fibre loaded thermoplastic resin components and between high and low fibre loaded thermoplastic resin components. Various surface treatments were tried on APC2 test coupons in an effort to encourage the thermoplastic resin to weld consistently, the main problems being the smoothness of the surface of the test coupons and the lack of matrix resin at the surface with which to form a weld.

Our first attempt at overcoming this problem was to form the test coupons with energy directors on those surfaces which were to be joined. These energy directors were triangular profile wedges of thermoplastic resin material moulded into the surface which were intended to amplify the ultrasonic energy at the point of contact and on melting of the wedge material it was expected that the melted material would flow evenly across the joint interface. This technique is commonly used when welding lower performance plastic materials and seemed to be the obvious choice at the outset of the trials. However, as can be seen from plots 1 to 6 in the graph of Figure 6, very poor shear strengths were obtained in welding together APC2 laminated test coupons. It was found that the energy directors melted locally and did not spread across the entire weld area. Also, the energy directors were found to have had an effect unrelated to their total length since when energy directors extending transversely of the test coupons were used, the shear strengths obtained were less than half those attainable with a cross-hatch pattern. This compares with a total length ratio of about 2.2 to 3 in favour of the transverse energy directors.

During welding of APC2 laminated test coupons to injection moulded test coupons, the energy directors tended to sink into the moulded test coupons and very poor shear strengths were obtained.

In an attempt to overcome the problems which had arisen with energy directors processed onto the surface of a laminated test coupon we obtained samples of thermoplastics resin fibres and tacked these fibres onto the weld area using a soldering iron. Although this gave a considerable increase in the amount of thermoplastics resin available at the interface, shear strengths of only 8 to 9 MPa (1200 psi) were obtained (reference plots 12, 15 and 16 in the graph of Figure 6). Once again sinking was found to be a problem when welding to injection moulded test coupons.

In furtherance of a solution to the lack of thermoplastic resin in the surface of the test coupons at the joint interface we decided to add additional thermoplastic resin prior to consolidation of the APC2 laminae. Strips of thermoplastic resin film in the order of 0.004 inch (0.01mm) thick were laid across the top surface of the outermost lamina of a test coupon in the weld area prior to consolidation in a heated press. Test coupons having thermoplastic resin enrichment in the weld area were then joined with standard APC2 laminated coupons having no enrichment.

The results from a set of three test specimens having thermoplastic resin enrichment only are shown in plot 14 of the graph of Figure 6.

Lower strengths were obtained from test specimens having thermoplastic resin enrichment in the weld area when energy directors, reference plot 13 of Figure 6; and thermoplastics resin fibres, reference plots 17 and 17 of Figure 6; were incorporated in the joint interface prior to welding.

We moved then to consider a solution to the problem of providing an electrically conductive path across the joint which is a requirement in aircraft structures such as the helicopter fuselage structure 51 shown in Figure 5, as an antenna ground plane, for equalisation of static electrical charges and protection against lightning strike. We decided to carry out tests with metal mesh incorporated in the interface between the test coupons.

Very good results were obtained from APC2 laminated test pieces having one of the test coupons enriched with thermoplastic resin in the weld area and a metal mesh incorporated in the joint interface manufactured from woven strands of a 68 per cent nickel - 29 per cent copper alloy and solid under the Registered Trade Mark "MONEL", reference plots 17, 18 and 19 of Figure 6. The reason for these good results was considered to be the presence of the "MONEL" metal mesh which provided multi-point contact at the interface thereby causing extra friction when ultrasonic vibratory energy was applied and, also, the strands of the mesh acting as energy directors to help spread the ultrasonic energy over the entire weld area.

Tests were then carried out with standard APC2 laminated coupons and "MONEL" metal mesh at the joint interface. Lower shear strengths were obtained as is seen from plot 20 of Figure 6. Similarly, when tests were carried out with copper mesh at the joint interface best results were obtained from test specimens having one of the test coupons enriched with thermoplastic resin in the weld area during manufacture, reference plots 21 and 22 of Figure 6.

In simplification of the method two variations were tried. The first variation was to consolidate the "MONEL" metal mesh in the surface together with the thermoplastic resin film during manufacture of the laminated test coupon. The result of this variation provided the required thermoplastic resin enriched surface but with a smooth surface as the thermoplastic resin filled the interstices between the metal strands. The lower shear strengths (reference plots 36, 40 and 41 of Figure 6) obtained from these test specimens are attributed to this factor. The second variation sought to avoid consolidation of the thermoplastic resin film during manufacture of the test coupon by adding it to the "MONEL" metal mesh. However, this resulted in a smooth laminate of thermoplastic resin and mesh which when incorporated in the joint interface of standard APC2 laminated test pieces gave lower shear stresses as is seen in plot 23 of Figure 6.

An improvement on these results was obtained by sandwiching the thermoplastic resin film between two layers of mesh and incorporating the resulting laminate at the joint interface prior to welding (reference plot 35 of Figure 6). This was attributed to the desired rough surface being maintained but is considered too heavy for use in aircraft construction although it may find use in constructions where weight is not a consideration.

The results of similar tests carried out on APC2 laminated test coupons joined to injection moulded test coupons are shown in the graph of Figure 7. It will be seen that good results were obtained from test pieces having the weld surface area of the APC2 laminated test coupon enriched with thermoplastics resin and "MONEL" metal mesh incorporated at the interface between the test coupons prior to ultrasonic welding.

These results show that it is joint configuration and not materials that influence the performance of the weld, and that good results are obtained if the weld surface area of at least one of the components to be joined is enriched with thermoplastic resin, and a hard metal mesh, such as "MONEL" metal mesh is incorporated at the interface of the components prior to joining by fusion bonding such as, for example, by ultrasonic welding.

Having established what we considered to be the preferred design for the joint interface we sought also to establish the most suitable horn and booster combinations together with the most favourable operating parameters for the ultrasonic welding machine.

We considered first that using the machine at about 70 per cent power for a period of up to four seconds might give best results since this would enable the surface thermoplastic resin at the interface to melt and flow across the weld area for a reasonable amount of time. We found, however that the power setting is, to some extend, of lesser importance as it dictates only how long the thermoplastic resin takes to melt, and it is more important to allow sufficient time for the melted resin to flow evenly across the interface and into the interstices between the strands of the metal mesh.

It was apparent also that carbon fibres present in the molten resin vibrated against each other with the result that heating continued until the resin began to degrade.

For that reason short, high power welding was considered to be the best weld method, although in some circumstances 2 to 3 seconds weld times could be used successfully, especially when clamping pressure was below 210 kPa.

Having established that weld time was dictated by how quickly the horn could melt the thermoplastic resin, weld pressure was fixed by the need to extract approximately 95 per cent power from the machine. Power drawn is related to amplitude of vibration of the particular horn plus booster being used, and the pressure applied. In general it was found that if the vibration amplitude is small then high pressures can be used.

Thus for horn A, a large, low amplitude horn, high pressures were used even with the high ratio silver booster. Conversely, only low pressures could be used with high amplitude horns D and E when coupled to the silver booster. As high pressures were considered to be beneficial the gold booster was obtained for use with horns D and E. This enabled pressures of up to 415 kPa to be attained. The green booster allowed even higher pressures to be used with horns D and E, up to the limit of 690 kPa but power drawn from the machine was only in the order of 50 per cent of maximum resulting in poor welds.

The results obtained show that for a particular horn and booster combination, the higher the pressure, the better the weld. The choice of horn would appear to be of lesser importance since the best results are similar for each horn. It is apparent that as long as the machine parameters are set to obtain maximum power for just long enough to melt the resin without degradation, shear strengths in the order of 20 MPa for APC2 laminated test piece welds and 18 MPa for APC2 laminated to injection moulded test piece welds can be attained.

The advantages offered by the knurled horn D are less variation and slightly improved shear strengths; however, the penalty is surface marking at high pressures which might prove unacceptable in a primary structure such as an aircraft fuselage.

11

We are aware that problems will arise in joining by ultrasonic welding fibre reinforced thermoplastic resin components when the fusion bond line required is of any considerable length and, also, if the components have curved surfaces. Bond lines of considerable length would require very large welding horns and very high amounts of energy would have to be input to such horns to make them vibrate ultrasonically. Ultrasonic welding of components having curved surfaces, such as are found in aircraft fuselage structures, presents an additional difficulty in that a welding horn of any considerable length along its welding face would have to be shaped to match the curvature of the surface of the component with which it was required to make contact, and a number of horns of different curvature would be needed for welding at various locations along the fuselage.

We propose to overcome these problems by adopting a method in which a welding horn having a small weld surface area is used to produce a plurality of discontinuous welds but with each weld being contiguous with its neighbouring welds. By such a step welding technique a satisfactory continuous fusion bond line can be achieved without the requirement for large welding horns. Also, this step welding technique lends itself to joining components having curved surfaces.

In construction of the helicopter fuselage 51 shown in Figure 5 it is desirable in providing electrical conductivity across joints 52 between carbon fibre reinforced thermoplastic resin panels 53, 54, 55, 56 to ensure that current flow is evenly distributed across all joints as shown by the arrows 57 and to preclude the establishment of preferential electrically conductive paths along and around the fuselage in which the joints are the primary conductors as shown by the arrows 58. The possibility of the joints becoming primary electrically conductive paths arises if an all-metal mesh is used at the joint interface. As a solution to this problem we propose the use of a hybrid mesh woven from metal and thermoplastic resin strands. Such a hybrid mesh has metal warp strands extending across the joint between two panels so as to provide continuing electrical conductivity between these components and thermoplastic resin weft strands extending along the length of the joint so as to preclude the establishment of a primary conductive path along the length of the joint. When fusion bonding takes place the thermoplastic resin strands will be diffused into the panels or skins leaving the metal warp strands embedded in the matrix resin.

Of course in use of an all-metal woven mesh this problem may be overcome by providing breaks in the metal mesh along the length of a joint; however, this is considered a less acceptable solution in that it complicates assembly of the components in production of the fuselage.

Whilst in carrying out tests to prove our invention we have chosen to effect fusion bonding by the use of ultrasonic welding techniques, it should be understood that our invention is not limited to ultrasonic welding but may also be employed in joining high fibre loaded thermoplastic resin components by fusion bonding using other techniques such as, for example, friction welding using a high speed rotating wheel.

## Claims

1. A method of manufacturing a fusion bonded joint between fibre reinforced thermoplastic resin components, at least one of said components being high fibre loaded by having in excess of 30 per cent by volume comprised by reinforcing fibres, characterised in that additional thermoplastic resin is incorporated at the joint interface prior to joining by fusion bonding.

2. A method as claimed in Claim 1, characterised in that the additional thermoplastic resin is consolidated in surface areas of high fibre loaded components prior to joining by fusion bonding.

3. A method as claimed in Claim 2, characterised in that the additional thermoplastic resin reduces the fibre loading in said surface areas towards 30 per cent of less by volume.

4. A method as claimed in any preceding claim, characterised in that a mesh comprising metal strands extending in at least one direction thereof is incorporated at the joint interface prior to joining by fusion bonding.

5. A method as claimed in any preceding claim, characterised in that the fusion bonding is effected by ultrasonic welding.

6. A method as claimed in Claim 5, characterised in that a continuous fusion bond line is produced by a step welding technique comprising making a series of discontinuous welds of small area with each weld area being contiguous with its neighbouring weld areas.

7. An assembly of one or more high fibre loaded thermoplastic resin components joined by fusion bonding with one or more high or low fibre loaded thermoplastic resin components, characterised by consolidation of additional thermoplastic resin at joint interfaces between said components.

8. An assembly as claimed in Claim 7, characterised in that a mesh having metal strands extending at least across the joint is incorporated at said joint interfaces.

9. An assembly as claimed in Claim 8, characterised in that the metal strands are manufactured from a nickel-copper based alloy.

10. An assembly as claimed in Claim 8 or 9, characterised in that weft strands of the mesh extending along the length of the joint are manufactured from thermoplastic resin.

11. An assembly as claimed in any one of Claims 7 to 10, characterised in that fusion bond lines between said joined components comprise a plurality of discontinuous welds of small area with each weld area being contiguous with its neighbouring weld areas.

Fig.1.

Fig.2.

Fig.3.

Fig.4.

Fig.5.

Fig.6.

Fig.7.

STRESS (MPa)

P = ADDITIONAL THERMOPLASTIC RESIN AT JOINT INTERFACE.

'A' HORN    'D' HORN    'E' HORN

PLOT NUMBER (horn type)

0 261 850